# EUROPEAN PATENT APPLICATION

(11) **EP 1 729 163 A1**
(43) Date of publication of application: **06.12.2006**
(21) Application number: 05721101.3
(22) Date of filing: 18.03.2005
(51) Int. Cl.: G02B 27/02, G02B 26/10, G09G 3/02

(54) **RETINA SCANNING DISPLAY AND SIGNAL PROCESSOR**

(30) Priority: 24.03.2004 JP 2004086615
(71) Applicant: Brother Kogyo Kabushiki Kaisha, Nagoya, Aichi 467-8561 (JP)
(72) Inventor: SAKAUE, Osamu, Mizuho-ku, Nagoya-shi, Aichi 4678561 (JP)
(74) Representative: Smith, Samuel Leonard
(86) International application number: PCT/JP2005/004914
(87) International publication number: WO 2005/091048

(57) **Abstract**

A retinal scanning display for displaying an image to a viewer by two-dimensionally scanning a beam of light on the viewer's retina is provided, for improvement in reproducibility of a displayed image for content, with an emitter emitting the beam of light; a light modulator modulating an optical characteristic of the beam of light, based on an entered light-modulation signal; a scanner scanning the modulated beam of light two-dimensionally; and a corrector correcting the light-modulation signal which is to be entered into the light modulator, such that linearity of a command-to-actual-light-modulation-value relationship between a command value and an actual value for the light modulation of the optical characteristic is enhanced.

## Description

### Technical Field

The invention relates to techniques of displaying an image to a viewer by a two-dimensional scan of a beam of light on the viewer's retina, and more particularly to techniques of improving reproducibility of a displayed image for content.

### Background Art

There has existed as a type of an image display device, a retinal scanning display for displaying an image to a viewer by two-dimensionally scanning a beam of light on the viewer's retina (See, for example, Japanese Patent No.2874208).

Typically, such a retinal scanning display is configured to include: (a) an emitter for emitting a beam of light (e.g., a light source) ; (b) a light modulator for modulating an optical characteristic of the beam of light, based on an entered light-modulation signal; and (c) a scanner for scanning the modulated beam of light two-dimensionally.

In this regard, the "light modulator" is typically configured to include a light-intensity modulator modulating a light intensity (referred to also as a luminance) which is an exemplary one of optical characteristics of a beam of light. The light-intensity modulator may be, for example, of a type in which the light-intensity modulator is structurally independent of the emitter (e.g., an acousto-optic modulating element), or of a type in which the light-intensity modulator is built into the emitter (e.g., a semiconductor laser).

A case exists where the aforementioned light modulator is configured to include a wavefront modulator for modulating a curvature of wavefront which is an exemplary one of optical characteristics of a beam of light, based on an entered depth signal.

In this regard, the "wavefront modulator" may be, for example, of a type in which the wavefront modulator modulates the curvature of wavefront, per each of sub-areas (e.g., pixels) composing an image, or of a type in which the wavefront modulator modulates the curvature of wavefront, per each of frames of an image (a type allowing a plurality of sub-areas forming the same frame to share the same curvature of wavefront).

### Disclosure of the Invention

In the retinal scanning display described above, the light-intensity modulator modulates the intensity of a beam of light, in response to a light-intensity signal indicative of a command value of the intensity of a beam of light. The beam of light which has been intensity-modulated by the light-intensity modulator is scanned two-dimensionally by the scanner, and an actual value of the light intensity (hereinafter, referred to as "actual light-intensity-value") of the beam of light which has been thus scanned is perceived by a viewer as a displayed image.

For such a type of a retinal scanning display, the present inventor conducted research for techniques for improving color reproducibility of a displayed image for content. As a result, the present inventor has found that there are variations in color reproducibility between dots of a displayed image, that there are variations in color reproducibility between colored components of a beam of light, and that the light intensity or the actual light-intensity-value of a displayed image fails to vary adequately linearly in proportion to a command value of the light intensity (hereinafter, referred to as "command light-intensity-value").

Further, the present inventor conducted an added research on a retinal scanning display in which the scanner scans an incident beam of light by causing a reflective surface to reflect the incident beam of light at a varying angle. As a result, the present inventor has found that an actual value of the depth (hereinafter, referred to as "actual depth value") and a command value of the depth (hereinafter, referred to as "command depth value") fail to vary adequately linearly relative to each other.

With the above findings in mind, the present invention, pertaining to techniques of displaying an image to a viewer by two-dimensionally scanning a beam of light on the viewer's retina, is directed to correction of a light-modulation signal which is to be inputted to a light modulator for the purpose of improving reproducibility of a displayed image for content.

According to the present invention, there are provided the following modes. These modes will be stated below such that these modes are sectioned and numbered, and such that these modes depend upon the other mode or modes, where appropriate. This is for a better understanding of some of a plurality of technological features and a plurality of combinations thereof disclosed in this description, and does not mean that the scope of these features and combinations is interpreted to be limited to the scope of the following modes. That is to say, it should be interpreted that it is allowable to select the technological features which are stated in this description but which are not stated in the following modes, as the technological features of this invention.

Furthermore, stating each one of the selected modes in such a dependent form as to depend from the other mode or modes does not exclude a possibility of the technological features in a dependent-form mode to become independent of those in the corresponding depended mode or modes and to be removed therefrom. It should be interpreted that the technological features in a dependent-form mode is allowed to become independent according to the nature of the corresponding technological features, where appropriate.
(1) A retinal scanning display for displaying an image to a viewer by two-dimensionally scanning a beam of light on the viewer's retina, the retinal scanning display comprising:
   an emitter emitting the beam of light;
   a light modulator modulating an optical characteristic of the beam of light, based on an entered light-modulation signal;
   a scanner scanning the modulated beam of light two-dimensionally; and
   a first corrector correcting the light-modulation signal which is to be entered into the light modulator, such that linearity of a command-to-actual-light-modulation-value relationship between a command value and an actual value for the light modulation of the optical characteristic is enhanced.

   In this retinal scanning display, a light-modulation signal which is to be entered into the light modulator is corrected, such that linearity of a command-to-actual-light-modulation-value relationship between a command value and an actual value for the light modulation of an optical characteristic becomes higher than that before the light-modulation signal is corrected.
   This retinal scanning display would therefore provide enhancement in the linearity of the command-to-actual-light-modulation-value relationship with respect to an optical characteristic of a beam of light. As a result, this allows an increase in color reproducibility of a displayed image for content.
(2) The retinal scanning display according to mode (1), wherein the first corrector corrects the light-modulation signal which is to be entered into the light modulator, such that the linearity of the command-to-actual-light-modulation-value relationship is enhanced irrespective of input-output characteristics of the light modulator.
   This retinal scanning display would allow enhancement in the linearity of the command-to-actual-light-modulation-value relationship, irrespective of the input-output characteristics of the light modulator, resultantly allowing an increase in color reproducibility of a displayed image for content.
(3) The retinal scanning display according to mode (1) or (2), wherein the light modulator includes a light-intensity modulator modulating an intensity of the beam of light, based on an entered light-intensity signal.
   This retinal scanning display would allow enhancement in the linearity of the command-to-actual-value relationship with respect to the intensity of a beam of light, resultantly allowing an increase in color reproducibility of a displayed image for content.
(4) The retinal scanning display according to mode (3), wherein the emitter emits a plurality of different-colored component beams of light,
   wherein the light-intensity modulator modulates the intensity of each component beam of light, based on the entered light-intensity signal, per each component beam of light,
   wherein the retinal scanning display further comprises a combiner combining the plurality of different-colored component beams of light into a composite beam of light, upon each component beam of light being intensity-modulated by the light-intensity modulator,
   wherein the scanner scans the composite beam of light two-dimensionally, and
   wherein the first corrector includes a first correcting section correcting the light-intensity signal which is to be entered into the light-intensity modulator, such that linearity of a command-to-actual-light-intensity-value relationship between a command value and an actual value for the light intensity is enhanced, per each component beam of light.
   The present inventor conducted research on a retinal scanning display of a type in which an image is displayed to a viewer by scanning two-dimensionally on the viewer' s retina, a composite beam of light obtained by combining a plurality of different-colored component beams of light, for techniques of correcting a light-intensity signal which is to be entered into a light-intensity modulator, which are adequate for improving the color reproducibility of a displayed image.
   The above research has resulted in the present inventor's findings that, unless light-intensity signals which are to be entered into a light-intensity modulator are corrected per each colored component-beam of light, the color reproducibility of a displayed image is likely to deteriorate.
   With the above findings in mind, in the retinal scanning display according to the present mode, the light-intensity signal which is to be entered into the light-intensity modulator is corrected, such that the linearity of a command-to-actual-value relationship between a command value and an actual value for the light intensity is enhanced, per each component beam of light.
   This retinal scanning display would therefore provide enhancement in the command-to-actual-light-intensity-value relationship for every different-colored component beams of light. As a result, this allows stabilized color-balance of a displayed image, with improved color-reproducibility of the displayed image for content, irrespective of the command value of light-intensity.
(5) The retinal scanning display according to mode (3) or (4), wherein the scanner scans the beam of light by varying an angle of a reflective surface reflecting an incident beam of light thereon, and
   wherein the retinal scanning display further comprises a second corrector correcting the light-intensity signal which is to be entered into the light-intensity modulator, such that an actual value of the intensity with which the beam of light illuminates each of sub-areas of an image to be displayed does not depend on a position of each sub-area, irrespective of a characteristic of the scanner that a reflectance of the reflective surface of the scanner varies with varying angles of the reflecting surface.
   In this retinal scanning display, a light-intensity signal is corrected which is to be entered into the light-intensity modulator, such that an actual value of the intensity with which the beam of light illuminates each of sub-areas of an image to be displayed does not depend on a position of each sub-area, irrespective of the characteristic of the scanner that the reflectance of the reflective surface of the scanner varies with a varying angle of the reflecting surface.
   This retinal scanning display would therefore facilitate reduction in light-intensity variations in a displayed image, irrespective of the characteristic of the scanner that the reflectance of the reflective surface of the scanner varies with a varying angle of the reflecting surface.
   The "each of sub-areas of an image to be displayed" set forth in the present mode may be, for example, in the form of each pixel, or a pixel group comprised of adjacent pixels.
(6) The retinal scanning display according to any one of modes (1) - (5), wherein the light modulator includes a wavefront modulator modulating a curvature of wavefront of the beam of light, based on an entered depth signal, and
   wherein the first corrector includes a second correcting section correcting the depth signal which is to be entered into the wavefront modulator, such that linearity of a command-to-actual-depth-value relationship between a command value and an actual value for the depth is enhanced.
   In this retinal scanning display, a depth signal which is to be entered into the wavefront modulator is corrected, such that linearity of a command-to-actual-depth-value relationship between a command value and an actual value for the depth is enhanced.
   This retinal scanning display would therefore allow enhancement in the linearity of actual depth values relative to command depth values, with an increased ease in improving in-focus-position reproducibility of a displayed image for content.
(7) The retinal scanning display according to mode (6), wherein the second correcting section corrects the depth signal which is to be entered into the wavefront modulator, such that the linearity of the command-to-actual-depth-value relationship is enhanced irrespective of input-output characteristics of the wavefront modulator.
   This retinal scanning display would therefore allow enhancement in the linearity of the command-to-actual-depth-value relationship, irrespective of the input-output characteristics of the wavefront modulator.
(8) A retinal scanning display for displaying an image to a viewer by two-dimensionally scanning a beam of light on the viewer's retina, the retinal scanning display comprising:
   an emitter emitting the beam of light;
   a light-intensity modulator modulating an intensity of the beam of light, based on an entered light-intensity signal;
   a wavefront modulator modulating a curvature of wavefront of the beam of light, based on an entered depth signal
   a scanner two-dimensionally scanning the beam of light which has been intensity- and wavefront-modulated; and
   at least one of a first corrector correcting the light-intensity signal which is to be entered into the light-intensity modulator, based on a light-intensity command value indicated by the light-intensity signal; a second corrector correcting the light-intensity signal which is to be entered into the light-intensity modulator, based on a position of each of sub-areas of an image to be displayed, the sub-areas being sequentially illuminated with the beam of light; and a third corrector correcting the depth signal which is to be entered into the wavefront modulator, based on a depth command value indicated by the depth signal.

   In a situation where this retinal scanning display is configured to include at least the first corrector, a light-intensity signal which is to be entered into the light-intensity modulator is corrected, based on a light-intensity command value indicated by the light-intensity signal. This situation therefore provides, for example, maintenance in the linearity in a command-to-actual-value relationship for the intensity of a beam of light, or preservation of color balance of a displayed image irrespective of possible variations in a command value of the light intensity.
   In addition, in a situation where the retinal scanning display according to the present mode is configured to include at least the second corrector, a light-intensity signal which is to be entered into the light-intensity modulator is corrected based on a position of each of sub-areas of an image to be displayed, wherein the sub-areas are sequentially illuminated with the beam of light. This situation therefore provides, for example, reduction in light-intensity variations in a displayed image.
   Moreover, in a situation where the retinal scanning display according to the present mode is configured to include at least the third corrector, a depth signal which is to be entered into the wavefront modulator is corrected based on a depth command value indicated by the depth signal. This situation therefore provides, for example, enhancement in the linearity in a command-to-actual-value relationship for the depth or the in-focus-position of a displayed image.
(9) A signal processing apparatus useable in combination with a retinal scanning display for displaying an image to a viewer by two-dimensionally scanning a beam of light on the viewer's retina, the retinal scanning display including: (a) an emitter emitting the beam of light;(b) a light modulator modulating an optical characteristic of the beam of light, based on an entered light-modulation signal; and (c) a scanner scanning the modulated beam of light two-dimensionally,
   the signal processing apparatus comprising a first corrector correcting the light-modulation signal which is to be entered into the light modulator, such that linearity of a command-to-actual-value relationship between a command value and an actual value for the light modulation of the optical characteristic is enhanced.
   In this signal processing apparatus, a light-modulation signal which is to be entered into the light modulator is corrected, such that linearity of a command-to-actual-light-modulation-value relationship between a command value and an actual value for the light modulation of an optical characteristic becomes higher than that before the light-modulation signal is corrected.
   This signal processing apparatus would therefore provide enhancement in the linearity of the command-to-actual-light-modulation-value relationship with respect to an optical characteristic of a beam of light. As a result, this allows an increase in color reproducibility of a displayed image for content.
   This signal processing apparatus may be of a type in which the signal processing apparatus is configured to be separate from a retinal scanning display useable in combination with the signal processing apparatus, or a type in which the signal processing apparatus is configured to be built into the retinal scanning display.
(10) The signal processing apparatus according to mode (9), wherein the first corrector corrects the light-modulation signal which is to be entered into the light modulator, such that the linearity of the command-to-actual-value relationship is enhanced irrespective of input-output characteristics of the light-intensity modulator.
   This signal processing apparatus would allow enhancement in the linearity of the command-to-actual-light-modulation-value relationship, irrespective of the input-output characteristics of the light modulator, resultantly allowing an increase in color reproducibility of a displayed image for content.
(11) The signal processing apparatus according to mode (9) or (10), wherein the light modulator includes a light-intensity modulator modulating an intensity of the beam of light, based on an entered light-intensity signal.
   This signal processing apparatus would allow enhancement in the linearity of the command-to-actual-value relationship with respect to the intensity of a beam of light, resultantly allowing an increase in color reproducibility of a displayed image for content.
(12) The signal processing apparatus according to mode (11), wherein the emitter emits a plurality of different-colored component beams of light,
   wherein the light-intensity modulator modulates the intensity of each component beam of light, based on the entered light-intensity signal, per each component beam of light,
   wherein the retinal scanning display further comprises a combiner combining the plurality of different-colored component beams of light into a composite beam of light, upon each component beam of light being intensity-modulated by the light-intensity modulator,
   wherein the scanner scans the composite beam of light two-dimensionally, and
   wherein the first corrector includes a first correcting section correcting the light-intensity signal which is to be entered into the light-intensity modulator, such that linearity of a command-to-actual-light-intensity-value relationship between a command value and an actual value for the light intensity is enhanced, per each component beam of light.
   This signal processing apparatus would therefore provide enhancement in the command-to-actual-light-intensity-value relationship for every different-colored component beams of light. As a result, this allows increased color-balance of a displayed image, with improved color-reproducibility of the displayed image for content, irrespective of the command value of light-intensity.
(13) The signal processing apparatus according to mode (11) or (12), wherein the scanner scans the beam of light by varying an angle of a reflective surface reflecting an incident beam of light thereon, and
   wherein the signal processing apparatus further comprises a second corrector correcting the light-intensity signal which is to be entered into the light-intensity modulator, such that an actual value of the intensity with which the beam of light illuminates each of sub-areas of an image to be displayed does not depend on a position of each sub-area, irrespective of a characteristic of the scanner that a reflectance of the reflective surface of the scanner varies with varying angles of the reflecting surface.
   In this signal processing apparatus, a light-intensity signal is corrected which is to be entered into the light-intensity modulator, such that an actual value of the intensity with which the beam of light illuminates each of sub-areas of an image to be displayed does not depend on a position of each sub-area, irrespective of the characteristic of the scanner that the reflectance of the reflective surface of the scanner varies with varying angles of the reflecting surface.
   This signal processing apparatus would therefore facilitate reduction in light-intensity variations in a displayed image, irrespective of the characteristic of the scanner that the reflectance of the reflective surface of the scanner varies with varying angles of the reflecting surface.
(14) The signal processing apparatus according to any one of modes (9)-(13), wherein the light modulator includes a wavefront modulator modulating a curvature of wavefront of the beam of light, based on an entered depth signal, and
   wherein the first corrector includes a second correcting section correcting the depth signal which to be entered into the wavefront modulator, such that linearity of a command-to-actual-depth-value relationship between a command value and an actual value for the depth is enhanced.
   In this signal processing apparatus, a depth signal which is to be entered into the wavefront modulator is corrected, such that linearity of a command-to-actual-depth-value relationship between a command value and an actual value for the depth is enhanced.
   This signal processing apparatus would therefore allow enhancement in the linearity of actual depth values relative to command depth values, with an increased ease in improving in-focus-position reproducibility of a displayed image for content.
(15) The signal processing apparatus according to mode (14), wherein the second correcting section corrects the depth signal which is to be entered into the wavefront modulator, such that the linearity of the command-to-actual-depth-value relationship is enhanced irrespective of input-output characteristics of the wavefront modulator.
   This signal processing apparatus would allow enhancement in the linearity of the command-to-actual-depth-value relationship, irrespective of the input-output characteristics of the wavefront modulator.
(16) A signal processing apparatus useable in combination with a retinal scanning display for displaying an image to a viewer by two-dimensionally scanning a beam of light on the viewer's retina, the retinal scanning display including: (a) an emitter emitting the beam of light; (b) a light-intensity modulator modulating an intensity of the beam of light, based on an entered light-intensity signal; (c) a wavefront modulator modulating a curvature of wavefront of the beam of light, based on an entered depth signal; and (d) a scanner two-dimensionally scanning the beam of light which has been intensity- and wavefront-modulated, the signal processing apparatus comprising:
   at least one of a first corrector correcting the light-intensity signal which is to be entered into the light-intensity modulator, based on a light-intensity command value indicated by the light-intensity signal; a second corrector correcting the light-intensity signal which is to be entered into the light-intensity modulator, based on a position of each of sub-areas of an image to be displayed, the sub-areas being sequentially illuminated with the beam of light; and a third corrector correcting the depth signal which is to be entered into the wavefront modulator, based on a depth command value indicated by the depth signal.

In a situation where this signal processing apparatus is configured to include at least the first corrector, a light-intensity signal which is to be entered into the light-intensity modulator is corrected, based on a light-intensity command value indicated by the light-intensity signal. This situation therefore provides, for example, enhancement in the linearity in a command-to-actual-value relationship for the intensity of a beam of light, or preservation of color balance of a displayed image irrespective of possible variations in a command value of the light intensity.

In addition, in a situation where the signal processing apparatus according to the present mode is configured to include at least the second corrector, a light-intensity signal which is to be entered into the light-intensity modulator is corrected based on a position of each of sub-areas of an image to be displayed, wherein the sub-areas are sequentially illuminated with the beam of light. This situation therefore provides, for example, reduction in light-intensity variations in a displayed image.

Moreover, in a situation where the signal processing apparatus according to the present mode is configured to include at least the third corrector, a depth signal which is to be entered into the wavefront modulator is corrected based on a depth command value indicated by the depth signal. This situation therefore provides, for example, enhancement in the linearity in a command-to-actual-value relationship for the depth or the in-focus-position of a displayed image.

### Brief Description of the Drawings

Fig. 1 is a schematic diagram illustrating a retinal scanning display constructed according to a first embodiment of the present invention, together with a signal processing device 39;
Fig. 2 is side views for explaining a manner in which a wavefront modulator 22 in Fig. 1 operates;
Fig. 3 is a block diagram conceptually illustrating the retinal scanning display in Fig. 1, together with its interconnection relations with the signal processing device 39;
Fig. 4 is a block diagram conceptually illustrating the signal processing device 39 in Fig. 3;
Fig. 5 is graphs for explaining light-intensity correction performed by the signal processing device 39 in Fig. 3;
Fig. 6 is a top plan view illustrating a polygon mirror 104 in Fig. 1 in enlargement;
Fig. 7 is a graph for explaining a characteristic of the polygon mirror 104 depicted in Fig. 6, that the reflectance of the polygon mirror 104 depends on a scan angle θ;
Fig. 8 is graphs for explaining depth correction performed by the signal processing device 39 in Fig. 3;
Fig. 9 is an exploded perspective view illustrating an optical scanner 1104 of a horizontal scanning system 1100 in a retinal scanning display constructed according to a second embodiment of the present invention;
Fig. 10 is a sectional view selectively illustrating actuators 1150, 1152, 1154, and 1156 of an oscillating body 1124 in the optical scanner 1104 depicted in Fig. 9;
Fig. 11 is a perspective view selectively illustrating the oscillating body 1124 in Fig. 9;
Fig. 12 is a perspective view selectively illustrating a reflective mirror 1122 of the oscillating body 1124 depicted in Fig. 11;
Fig. 13 is graphs indicating a time-varying profile of the scan angle θ and a time-varying profile of a scan angular-velocity ω of the reflective mirror 1122 depicted in Fig. 11, respectively; and
Fig. 14 is a graph indicating how an apparent reflectance of the reflective mirror 1122 depicted in Fig. 11 varies as a pixel number NP changes.

### Best Mode for Carrying Out the Invention

Several ones of more specific embodiments of the present invention will be described in greater detail below with reference to the drawings.

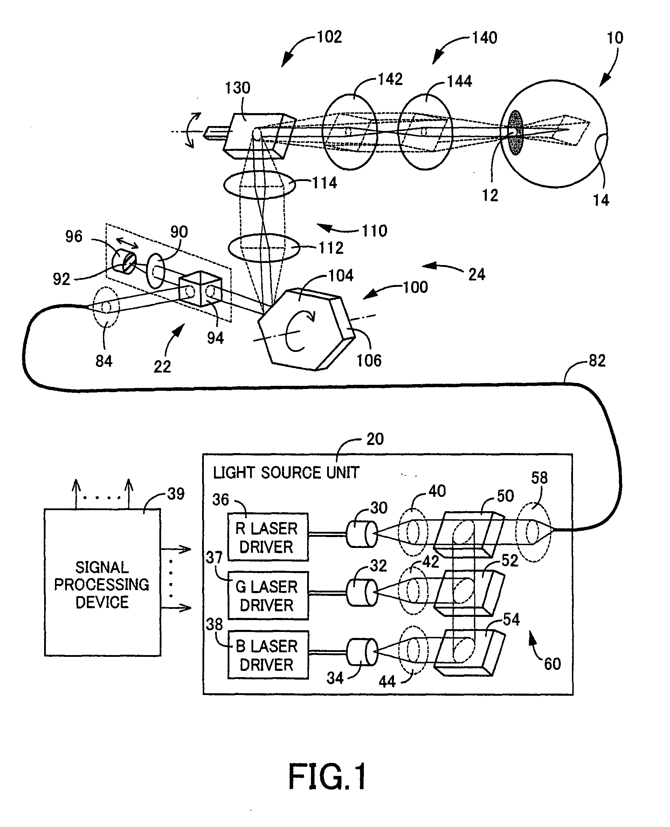

In Fig. 1, a retinal scanning display (hereinafter, abbreviated to "RSD") constructed according to a first embodiment of the present invention is schematically illustrated. This RSD is an apparatus adapted to allow a laser beam, while it is properly modulated in light-intensity and wavefront, to impinge onto an image plane on a retina 14 through a pupil 12 of a viewer's eye 10, and allow the laser beam to be two-dimensionally scanned on the image plane, to thereby directly project an image onto the retina 14.

This RSD includes a light source unit 20, and a wavefront modulator 22 and a scanning unit 24 both of which are disposed between the light source unit 20 and the viewer's eye 10, and arranged in the description order.

For generating a laser beam of any color by combining three beams of laser (i.e., an example of the "plurality of different-colored component beams of light" set forth in the above mode (1)) of three primary colors (RGB) into a single beam of laser (i.e., an example of the "composite beam of light" set forth in the above mode (1)), the light source unit 20 includes an R laser 30 emitting a red-colored beam of laser, a G laser 32 emitting a green-colored beam of laser, and a B laser 34 emitting a blue-colored beam of laser. These lasers 30, 32, and 34 each may be constructed as a semiconductor laser, for example.

Each of the lasers 30, 32, and 34 has s a light-intensity modulation function allowing the light intensity (luminance) of each of colored beams of laser emitted from the corresponding respective lasers 30, 32, and 34, to be modulated in accordance with an entered voltage signal. That is to say, these lasers 30, 32, and 34 together constitute a combination of an example of the "emitter" and an example of the "light-intensity modulator" both set forth in the above mode (1).

However, the present invention may be carried out in a mode in which the lasers 30, 32, and 34 are provided with respective light-intensity modulators (e.g., acousto-optic modulator AOMs) that are separate from the lasers 30, 32, and 34, on a laser-by-laser basis. In this mode, these lasers 30, 32, and 34 together constitute an example of the "emitter" set forth in the above mode (1), and the three light-intensity modulators associated with the three lasers 30, 32, and 34, respectively, together constitute an example of the "light-intensity modulator" set forth in the same mode.

As illustrated in Fig. 1, to each laser 30, 32, 34, there is electrically connected a corresponding one of the laser drivers 36, 37, and 38. An R signal which is in the form of a light-intensity signal for modulating the light intensity of a red-colored beam of laser is supplied from a signal processing device 39 to the laser driver 36 corresponding to the R laser 30, a G signal which is in the form of a light-intensity signal for modulating the light intensity of a green-colored beam of laser is supplied from the signal processing device 39 to the laser driver 37 corresponding to the G laser 32, and, a B signal which is in the form of a light-intensity signal for modulating the light intensity of a blue-colored beam of laser is supplied from the signal processing device 39 to the laser driver 37 corresponding to the B laser 34.

The individual laser drivers 36, 37, and 38 apply respective voltages (electric energy) to the corresponding respective lasers 30, 32, and 34 in response to respective light-intensity signals entered. The individual lasers 30, 32, 34 modulate the light intensities of beams of laser emitted from the corresponding respective lasers 30, 32, and 34, in response to the applied voltages. For each laser 30, 32, 34, the applied voltage does not linearly vary with respect to the intensity of light modulated in response to the applied voltage, and the relationship therebetween, which varies between the lasers 30, 32, and 34, which is to say, between the wavelengths of beams of laser, will be described below in more detail.

A beam of laser emitted from each laser 30, 32, 34 is caused to enter each dichroic mirror 50, 52, 54, after collimated by each collimating optical system 40, 42, 44. On these dichroic mirrors 50, 52, and 54, transmission and reflection of a laser beam occur in a wavelength-selective manner, allowing three colored beams of laser to be combined into a single beam of laser.

More specifically, a red-colored beam of laser emitted from the R laser 30 is caused to enter the dichroic mirror 50 after collimated by the collimating optical system 40. A green-colored beam of laser emitted from the G laser 32 is caused to enter the dichroic mirror 52 through the collimating optical system 42. A blue-colored beam of laser emitted from the B laser 34 is caused to enter the dichroic mirror 54 through the collimating optical system 44.

Three colored beams of laser entering the three dichroic mirrors 50, 52, and 54, respectively, eventually enter the dichroic mirror 54, which is a representative one of the dichroic mirrors 50, 52, and 54, to be combined thereat, and are subsequently focused at a combining optical system 58.

In the present embodiment, the three collimating optical systems 40, 42, and 44; the three dichroic mirrors 50, 52, and 54; and the combining optical system 58 together constitute a wave-combining optical system 60, which constitutes an example of the "combiner" set forth in the above mode (1).

The light source unit 20 described above emits a laser beam at the combining optical system 58. The laser beam emitted therefrom enters the wavefront modulator 22 after sequentially passing through an optical fiber 82 functioning as a light transmitting medium, and a collimating optical system 84 which collimates a laser beam emerging divergently from the optical fiber 82 at its rearward end, in the sequence set forth.

This wavefront modulator 22 is an optical system for modulating a wavefront (a curvature of waveront) of a laser beam emitted from the light source unit 20. This wavefront modulator 22 may be of a type, although it is inessential to practice the present invention, that performs the wavefront curvature modulation per each pixel of an image to be projected onto the retina 14, or alternatively, may be of a type that performs the wavefront curvature modulation per each frame of an image. The wavefront curvature modulation invites variations in in-focus-position of a displayed image.

In any case, this wavefront modulator 22 modulates the wavefront of an incoming laser beam, based on a depth signal (hereinafter, referred to also as a "Z signal") entered from the signal processing device 39. In this wavefront modulator 22, a laser beam incoming from the collimating optical system 84 in the form of parallel light is transformed into converging light by means of a converging lens 90, and the converging light into which parallel light has been transformed is transformed into diverging light due to reflection by means of a movable mirror 92. The diverging light into which the converging light has been transformed leaves the wavefront modulator 22 as a laser beam having a desired wavefront curvature.

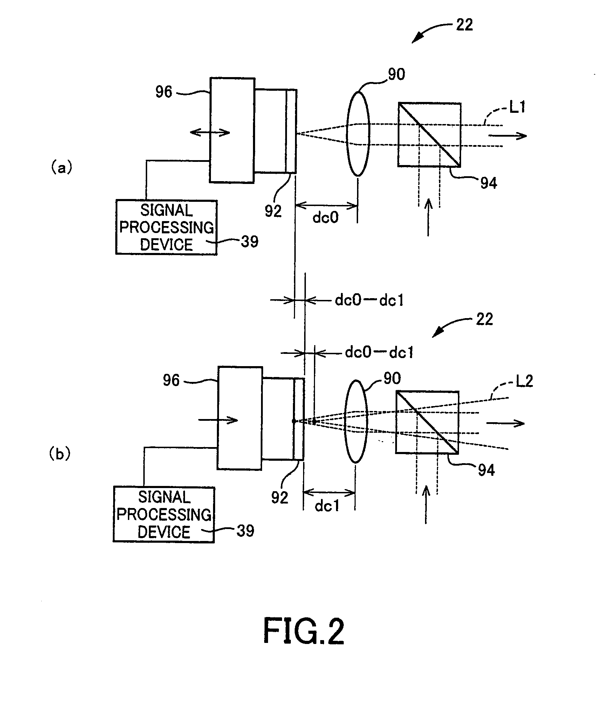

In Fig. 2, this wavefront modulator 22 is illustrated in enlargement. As illustrated in Fig. 2, this wavefront modulator 22 includes: a beam splitter 94 causing a laser beam entered from the outside to be reflected from or passed through the wavefront modulator 22; the converging lens 90 to converge the laser beam entered thereinto through the beam splitter 94; and the movable mirror 92 to reflect the laser beam converged by the converging lens 90.

This wavefront modulator 22 further includes an actuator 96 for causing the movable mirror 92 to be displaced in a direction allowing the movable mirror 92 to move toward or away from the converging lens 90. An example of the actuator 96 is a piezoelectric element. The actuator 96 moves the location of the movable mirror 92 in response to a depth signal (a Z signal) entered from the signal processing device 39, to thereby modulate the wavefront curvature of a laser beam emerging from the wavefront modulator 22. For this actuator 96, the relationship between an applied voltage and a curvature of wavefront modulated in response to the applied voltage does not exhibit linearity, which will be described below in greater detail.

In the wavefront modulator 22 constructed as described above, a laser beam entered from the collimating optical system 84 is reflected from the beam splitter 94 into the converging lens 90 and is then reflected from the movable mirror 92. Thereafter, the laser beam passes through the converging lens 90 again, and then passes through the beam splitter 94 to be directed to the scanning unit 24.

The wavefront modulator 22 varies a distance dc between the converging lens 90 and the movable mirror 92 by the use of the actuator 96, to thereby modulate the wavefront curvature of a laser beam entered from the collimating optical system 84 and traveling toward the scanning unit 24.

As illustrated in Fig. 2 (a), where the distance dc is equal to a predetermined initial value dc0, a laser beam entered from the collimating optical system 84 is focused at and reflected from the reflecting surface the movable mirror 92. The reflected laser beam travels through the converging lens 90 to the scanning unit 24 as parallel light L1 having the same wavefront curvature as when the laser beam was entered from collimating optical system 30.

On the other hand, as illustrated in Fig. 2 (b), where the distance dc has varied into a distance dc1 which is smaller than the initial value dc0, a laser beam entered from the collimating optical system 84, before focused, is reflected from the movable mirror 92 because the movable mirror 92 is positioned closer to the converging lens 90 than the focal point of the converging lens 90. The reflected laser beam is focused at a position located forward by a distance (dc0 minus dc1) from the movable mirror 92, and then travels through the converging lens 90 to the scanning unit 24 in the form of diverging light having a wavefront-curvature larger than when the laser beam was entered from the collimator optical system 30, which is to say, diverging light L2 having a small radius of curvature.

To summarize, for a laser beam directed from the curvature modulator 22 to the scanning unit 24, the shorter the distance dc, the smaller the radius of curvature. In the present embodiment, the initial value dc0 of the distance dc is set to 4 mm, and this RSD is configured such that the radius of curvature of a laser beam varies from a maximum value (e.g., 10 m) to a minimum value (e.g., 20 cm) as the distance dc is reduced from the initial value dc0 within a range of 30 µm.

Generally, the radius of curvature of wavefront of a laser beam is expressed as a reciprocal number of the wavefront curvature of a laser beam, and, as this radius of curvature becomes smaller, a viewer perceives a virtual image formed based on a laser beam at a position closer to the viewer. Therefore, the viewer perceives a virtual image at a position closer to the viewer, as the distance dc is caused to become shorter by means of the actuator 96.

A laser beam, upon leaving the wavefront modulator 22 described above, enters the scanning unit 24. This scanning unit 24 includes a horizontal scanning system 100 and a vertical scanning system 102. These horizontal and vertical scanning systems 100 and 102 are classified as a higher-speed scan system and a lower-speed scan system, respectively, in terms of a scan rate.

The horizontal scanning system 100 is an optical system which performs a raster scan allowing a laser beam to be scanned horizontally along a plurality of scan lines, per each frame of an image to be displayed. On the other hand, the vertical scanning system 102 is an optical system which performs a vertical scan allowing a laser beam to be scanned vertically from the first one toward the last one of the scan lines, per each frame of an image to be displayed.

More specifically, in the present embodiment, the horizontal scanning system 100 includes a polygon mirror 104 as a unidirectionally-rotating mirror causing mechanical deflection. The polygon mirror 104 is rotated about an axis of rotation which intersects with respect to the optical axis of a laser beam entered into the polygon mirror 104, at a higher rate, by means of a motor not shown. The rotational speed of the polygon mirror 104 is controlled in response to a horizontal scan sync signal supplied from the signal processing device 39.

The polygon mirror 104, which includes a plurality of mirror facets 106 positioned about the axis of rotation of the polygon mirror 104, performs a single cycle of deflection of a laser beam, each time an incoming laser beam passes through one of the mirror facets 106. Upon deflection, the laser beam is relayed to the vertical scanning system 102 by a relay optical system 110. In the present embodiment, the relay optical system 110 includes a plurality of lens systems 112 and 114 in series along the optical path.

Although the horizontal scanning system 100 has been described above, the vertical scanning system 102 includes a galvano mirror 130 as an angularly-oscillating mirror causing mechanical deflection. The galvano mirror 130 is arranged to allow a laser beam emerged from the horizontal scanning system 100, to be focused by the relay optical system 110 and enter the galvano mirror 130. The galvano mirror 130 is oscillated about an axis of rotation intersecting the optical axis of the laser beam entering the galvano mirror 130. The start-up timing and the rotational speed of the galvano mirror 130 are controlled in response to a vertical scan sync signal supplied from the signal processing device 39.

The horizontal scanning system 100 and the vertical scanning system 102 both described above cooperate together to two-dimensionally scan a laser beam, whereby an image represented by the scanned laser beam impinges on the viewer' s eye 10 via a relay optical system 140. In the present embodiment, the relay optical system 140 includes a plurality of lens systems 142 and 144 in series along the optical path.

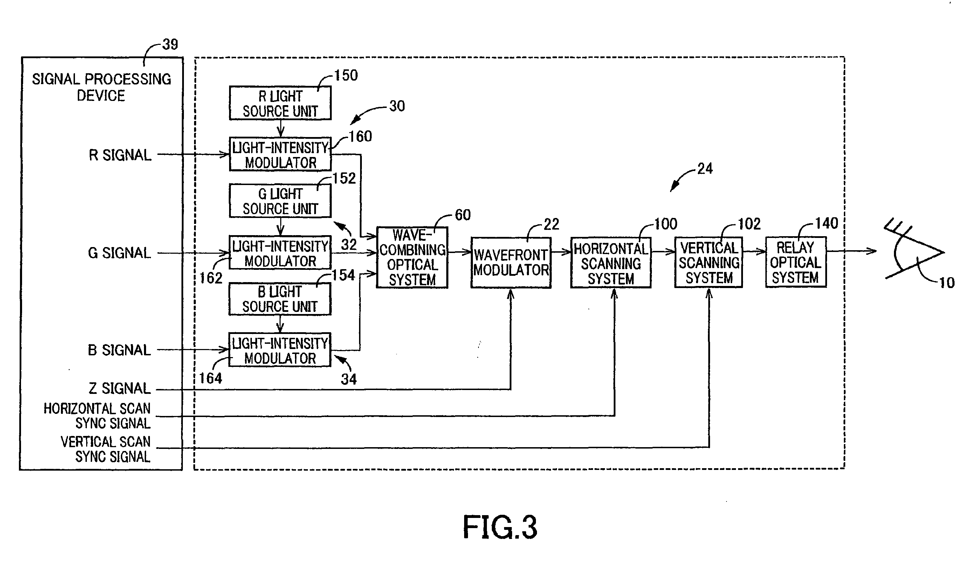

In Fig. 3, the entire configuration of this RSD is schematically illustrated in block diagram, and the relationship with the signal processing device 39 useable in combination with this RSD is also illustrated. However, in Fig. 3, the lasers 30, 32, and 34 are each illustrated in the form of a combination of a light source 150, 152, 154 and a light-intensity modulator 160, 162, 164, for indicating that each laser 30, 32, 34 functioning as both a light source and a light-intensity modulator. The signal processing device 39 supplies an R signal to the light-intensity modulator 160 corresponding to the R light source 150, a G signal to the light-intensity modulator 162 corresponding to the G light source 152, and a B signal to the light-intensity modulator 164 corresponding to the B light source 154.

As illustrated in Fig. 3, the signal processing device 39 further supplies a Z signal to the wavefront modulator 22, and supplies a horizontal scan sync signal and a vertical scan sync signal to the horizontal scanning system 100 and the vertical scanning system 102, respectively.

As illustrated in Fig. 3, the signal processing device 39, which is constructed, for the present embodiment, so as to be separate from the RSD, may be constructed to so as to be built into the RSD.

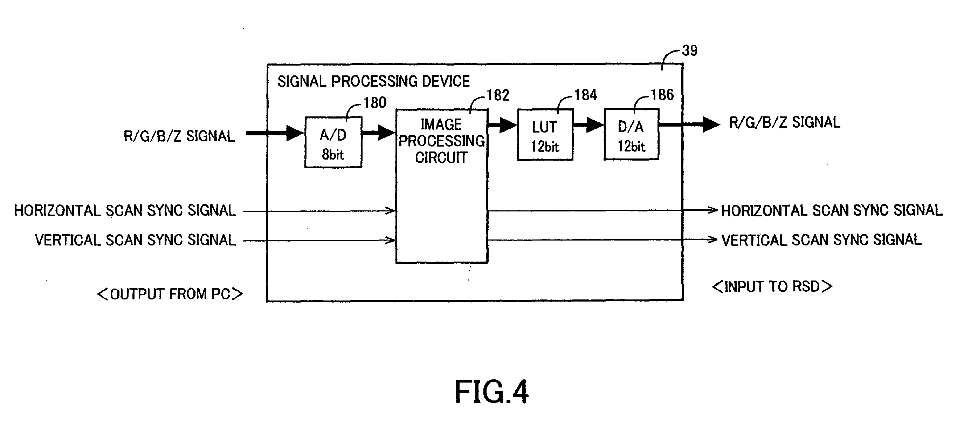

As illustrated in Fig. 1, the signal processing device 39, as will be described in more detail below with reference to Fig. 4, is constructed principally with an A/D 180, an image processing device 182, a LUT 184, and a D/A 186.

As illustrated in Fig 4, the signal processing device 39 is used as an interface interconnecting a personal computer (hereinafter, referred to simply as "PC") as a raw-image-signal supplying device, and the RSD as a reproducing device. The PC supplies to the signal processing device 39, source signals in the form of light-intensity signals including R, G, and B signals, and a Z signal which is a depth signal. The signal processing device 39 corrects these signals and then supplies them to the RSD.

The signal correction is performed to achieve the following purposes:
(1) Enhancement in linearity of the relationship between a light-intensity signal (R, G, and B signals) indicative of a command light-intensity value, and a light intensity actually achieved, irrespective of the input-output characteristics of the lasers 30, 32, and 34, per each of different-colored beams of laser;
(2) Enhancement in linearity of the relationship between a light-intensity signal (R, G, and B signals) indicative of a command light-intensity value, and a light intensity actually achieved, irrespective of the dependency of the reflectance of the scanning unit 24 upon a scan angle θ; and
(3) Enhancement in linearity of the relationship between a depth signal (a Z signal) indicative of a depth command value, and a depth actually achieved, irrespective of the input-output characteristics of the wavefront modulator 22.

For achieving these purposes, the above-mentioned signal correction includes the following variable individual operations for correction:
(1) Light-Intensity Correction
   In order to enhance the linearity of a relationship between a command light-intensity value and an actual light-intensity value, irrespective of the input-output characteristics of each laser 30, 32, 34, raw light-intensity signals (raw R, G, and B signals) supplied from a Z signal supplying device (e.g., a PC) are corrected and then supplied to the RSD in the form of corrected light-intensity signals (corrected R, G, and B signals);
(2) Reflectance Correction for Horizontal Scan
   In order to enhance the linearity of a relationship between a command light-intensity value and an actual light-intensity value, irrespective of the dependency of the reflectance of the horizontal scanning system 100 upon a scan angle (a pixel location on each scan line, i.e., a pixel number NP), raw light-intensity signals (raw R, G, and B signals) supplied from the PC are corrected and then supplied to the RSD in the form of corrected light-intensity signals (corrected R, G, and B signals);
(3) Reflectance Correction for Vertical Scan
   In order to enhance the linearity of a relationship between a command light-intensity value and an actual light-intensity value, irrespective of the dependency of the reflectance in the vertical scanning system 102 upon a scan angle (a position of each scan line as viewed in a vertical direction of an image, i.e., a scan line number NL), raw-light-intensity signals (raw R, G, and B signals) supplied from the PC are so corrected and then supplied to the RSD in the form of corrected light-intensity signals (corrected R, G, and B signals); and
(4) Depth Correction
   In order to enhance the linearity of a relationship between a command depth value and an actual depth value, irrespective of the input-output characteristics of the wavefront modulator 22, a raw Z signal (a raw depth signal) supplied from the PC is corrected and then supplied to the RSD in the form of a corrected Z signal (a corrected depth signal) .

In Fig. 4, the configuration of the signal processing device 39 is illustrated in schematic and simplified block diagram by particularizing the featured functions of the signal processing device 39. In the signal processing device 39, the A/D converter (denoted as "A/D" in Fig. 4) 180 converts all R/G/B/Z signals which are supplied from the PC in the form of analog signals per each pixel-dot, into digital data (8-bit data). Further, the image processing circuit 182 performs processing for outputting digital data on a pixel-by-pixel basis (hereinafter, referred to also as "pixel data"), in a timed relation with horizontal and vertical scan sync signals for use in the RSD.

In the signal processing device 39, a look-up table (denoted as "LUT" in Fig. 4) 184 is referenced to perform the above-mentioned signal correction for each pixel data. This LUT 184 allows 8-bit pixel data to be corrected into 12-bit pixel data. The correction characteristic has been previously adjusted for achieving the aforementioned purposes of the signal correction.

In the signal processing device 39, the D/A converter (denoted as "D/A" in Fig. 4) 186 corrects (converts) 12-bit pixel data which has been corrected in a manner described above, into an analog signal, and outputs the analog signal to the RSD. The LUT 184 is configured to include a plurality of individual tables (including a light-intensity correction table, a reflectance correction table for a horizontal scan, a reflectance correction table for a vertical scan, and a depth correction table, all of which tables will be described below), wherein these have been previously stored in an internal memory of the LUT 184.

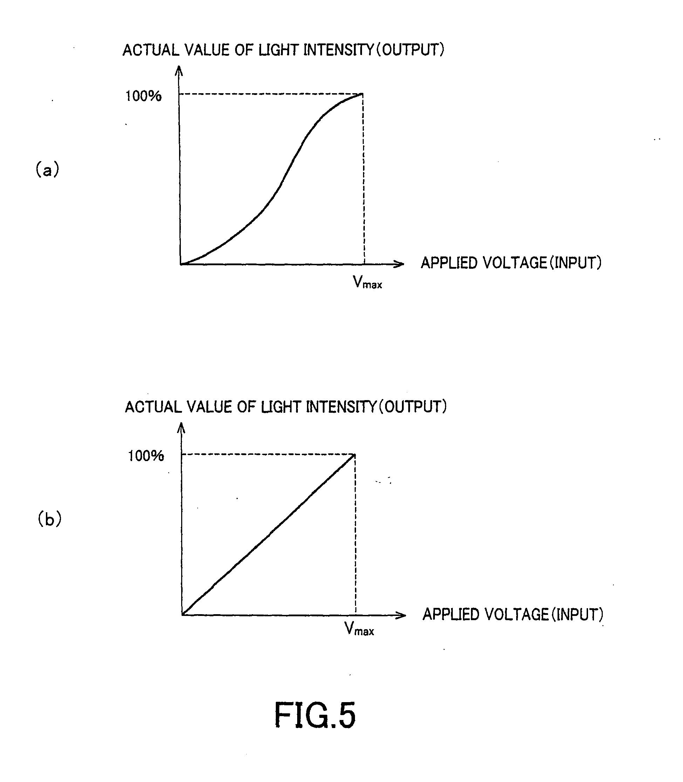

In Fig. 5(a), there is illustrated in graph an example of an input-output characteristic of the R laser 30, namely, the relationship between a voltage applied to the R laser 30 and an actual light-intensity value of the laser beam outputted from the R laser 30. Thus, the input-output characteristic of the R laser 30 is non-linear. In a case where a raw R signal supplied from the PC is delivered to the laser driver 3.7 without correction even in the presence of the non-linearity, and where a voltage is applied to the R laser 30 in response to the raw R signal, then the relationship between a command light-intensity value represented by the raw R signal and an actual light-intensity value of light outputted from the R laser 30 becomes non-linear as well. In this case, a viewer who uses this RSD is likely to feel incompatibility of the light intensity of a displayed image.

In contrast, in the present embodiment, raw light-intensity data is corrected into corrected light-intensity data by referring to the LUT 184. That is, a raw light-intensity signal is resultantly corrected. The correction characteristic is pre-set so as to cancel completely or partially the non-linearity graphed in Fig. 5(a). The light-intensity correction table of the LUT 184 reflects the correction characteristic. As a result, the present embodiment determines an R signal (a corrected R signal) which is to be supplied to the laser driver 37, based on the corrected light-intensity data, and determines a voltage actually applied to the R laser 30, in accordance with the corrected R signal.

Therefore, as graphed in Fig. 5(b), the present embodiment enhances the linearity of the relationship between a command light-intensity value represented by an original R signal, namely, an applied voltage (different from a voltage actually applied to the R laser 30) represented by a raw R signal, and an actual light-intensity value of light outputted from the R laser 30, so that the linearity becomes higher than when this light-intensity correction is not performed, irrespective of the input-output characteristics of the R laser 30 which is indicated in Fig. 5(a).

With respect to the relationship between a voltage applied to each laser 30, 32, 34 and the intensity of light outputted, these lasers 30, 32, and 34 are not always coincident with one another, but are different from one another, in general. For this reason, in the present embodiment, a light-intensity correction table is prepared respectively for the lasers 30, 32, and 34. Then, in the present embodiment, the light-intensity correction is performed respectively for each of the R, G, and B signals by referring to a corresponding one of light-intensity correction tables.

Once the light-intensity correction described above is terminated, then the aforementioned reflectance correction for a horizontal scan is performed by referring to the reflectance correction table for a horizontal scan in the LUT 184.

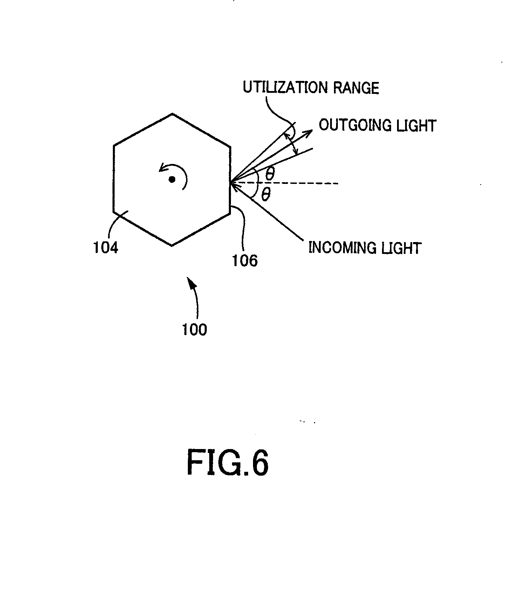

In Fig. 6, the polygon mirror 104 is illustrated in top plan view in enlargement. In the polygon mirror 104, an angle of one of the mirror facets 106 on which a laser beam impinges, namely, a scan angle θ varies, whereby the laser beam leaving the mirror facet 106 is deflected, resulting in a horizontal scan of the laser beam along a single scan line. In this polygon mirror 104, only ones of laser beams each of which leaves the mirror facet 106 at a scan angle θ falling within a predetermined range (e.g., from 40 degrees to 50 degrees) are utilized.

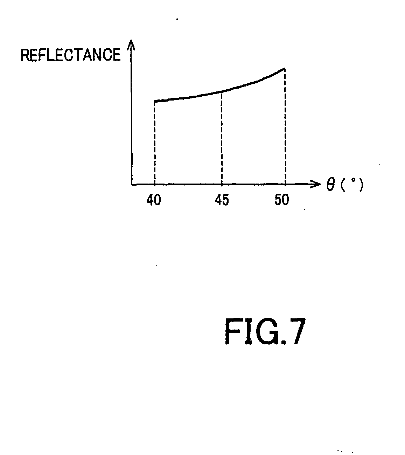

In Fig. 7, there is illustrated in graph the characteristic that the reflectance of the mirror facet 106 depends on a scan angle θ, within the above utilization range. The scan angle dependency causes non-linearity in the relationship between a command light-intensity value and an actual light-intensity value. On the other hand, a scan angle θ can be identified per each pixel-dot, provided that a position of a pixel which is illuminated by a laser beam at each time is identified, wherein the position is located in a horizontal scan line.

Then, in the present embodiment, the R, G, and B signals are each corrected in accordance with the positions of pixels which are sequentially illuminated with a laser beam, to establish a linear relationship between a command light-intensity value and an actual light-intensity value, irrespective of the scan angle dependency.

It is added that, in the present embodiment, the plurality of mirror facets 106 of the polygon mirror 104 are considered to be mutually identical in the dependency of the reflectance upon the scan angle to one another; however, they are likely not to be identical. That is, there exists the likelihood that different ones of the mirror facets 106 exhibit different reflectances at the same scan angle θ, when positionally different ones of the mirror facets 106 are utilized. In the presence of the likelihood, it is preferable that the position of one of the mirror facets 106 which is currently reflecting a laser beam is identified, based on, for example, the scan line number NL of a current scan line, and a raw light-intensity signal is corrected in accordance with the correction characteristic which is established in accordance with the identified position.

Once the reflectance correction for a horizontal scan described above is terminated, then the aforementioned reflectance correction for a vertical scan is performed by referring to the reflectance correction table for a vertical scan in the LUT 184, in a manner similar to that of the aforementioned reflectance correction for a horizontal scan.

Although the above description was made for the case where the LUT 184 includes all of the light-intensity correction table, the reflectance correction table for a horizontal scan, and the reflectance correction table for a vertical scan, it is not essential for the present invention to be carried out in such a mode. For example, the present invention may be carried out in a mode in which a single table (e.g., a table defining the relationship between a raw light-intensity signal (raw R/B/G signals), a pixel location, and a corrected light-intensity signal (corrected R/B/G signals)) which reflects all of the characteristics of those three tables, is stored in the internal memory of the LUT 184.

Thereafter, there is retrieved raw depth data represented by a raw Z signal supplied from the PC. The aforementioned depth correction is performed for the retrieved raw depth data.

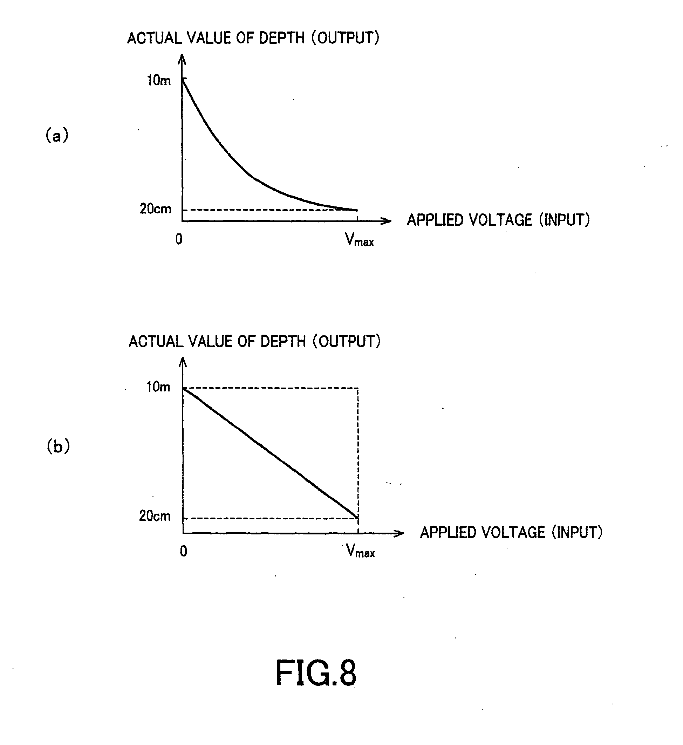

In Fig. 8(a), there is illustrated in graph an example of the input-output characteristic of the wavefront modulator 22, namely, the relationship between a voltage applied to the wavefront modulator 22 and a depth actually provided by the wavefront modulator 22. In this example, a reciprocal number of an applied voltage V is approximately related to an actual depth value Z.

Therefore, the calculation of an applied voltage V to the wavefront modulator 22 so as to be equal to the reciprocal of a command depth value represented by raw depth data would enhance the linearity between a command depth value represented by a raw Z signal supplied from the PC, and an actual depth value outputted by the wavefront modulator 22. Based on the fact, the depth correction table is prepared and previously stored in the internal memory of the LUT 184. The raw depth data is corrected by referring to this depth correction table.

As a result, as graphed in Fig. 8 (b), the linearity of a relationship between a command depth value represented by a raw Z signal, namely, an applied voltage represented by the raw Z signal, and an actual depth value obtained by the wavefront modulator 22 in response to a corrected Z signal representing the corrected depth data is enhanced to become higher than when the correction is not performed.

Once the depth correction described above is terminated, then the corrected light-intensity signals (corrected R, G, and B signals) representing respective sets of corrected light-intensity data, and the corrected Z signal representing corrected depth data are outputted respectively to the three lasers 30, 32, and 34, and the wavefront modulator 22.

As will be apparent from the above description, in the present embodiment, a combination of the RSD and the signal processing device 39 constitutes an example of the "retinal scanning display" set forth in the above mode (1), the lasers 30, 32, and 34 together constitute a combination of an example of the "emitter," and an example of the "modulator," both set forth in the same mode, the scanning unit 24 constitutes an example of the "scanner" set forth in the same mode, and a portion of the LUT 184 which is assigned to perform the light-intensity correction and the depth correction constitutes an example of the "first corrector" set forth in the same mode or in the above mode (2).

Further, in the present embodiment, the light-intensity modulators 160, 162, and 164 of the lasers 30, 32, and 34 together constitute an example of the "light-intensity modulator" set forth in the above mode (3), the light sources 150, 152, and 154 of the lasers 30, 32, and 34 together constitute an example of the "emitter" set forth in the above mode (4), the light-intensity modulators 160, 162, and 164 together constitute an example of the "light-intensity modulator" set forth in the same mode, the wave-combining optical system 60 constitutes an example of the "combiner" set for the in the same mode, the scanning unit 24 constitutes an example of the "scanner" set forth in the same mode, and a portion of the LUT 184 which is assigned to perform the light-intensity correction constitutes an example of the "first correcting section" set forth in the same mode.

Still further, in the present embodiment, the scanning unit 24 constitutes an example of the "scanner" set forth in the above mode (5), and a portion of the LUT 184 which is assigned to perform the reflectance correction for a horizontal scan and the reflectance correction for a vertical scan constitutes an example of the "second corrector" set forth in the same mode.

Yet still further, in the present embodiment, the wavefront modulator 22 constitutes an example of the "wavefront modulator" set forth in the above mode (6), and a portion of the LUT 184 which is assigned to perform the depth correction constitutes an example of the "second correcting section" set forth in the same mode or in the above mode (7).

Additionally, in the present embodiment, a combination of the RSD and the signal processing device 39 constitutes an example of the "retinal scanning display" set forth in the above mode (8), the light sources 150, 152, and 154 of the lasers 30, 32, and 34 together constitute an example of the "emitter" set forth in the same mode, the light-intensity modulators 160, 162, and 164 together constitute an example of the "light-intensity modulator" set forth in the same mode, the wavefront modulator 22 constitutes an example of the "wavefront modulator" set forth in the same mode, and the scanning unit 24 constitutes an example of the "scanner" set forth in the same mode.

Still additionally, in the present embodiment, a portion of the LUT 184 which is assigned to perform the light-intensity correction constitutes an example of the "first corrector" set forth in the above mode (8), a portion of the LUT 184 which is assigned to perform the reflectance correction for a horizontal scan and the reflectance correction for a vertical scan constitutes an example of the "second corrector" set forth in the same mode, and a portion of the LUT 184 which is assigned to perform the depth correction constitutes an example of the "third corrector" set forth in the same mode.

Yet still additionally, in the present embodiment, the signal processing device 39 can be considered to constitute an example of the "signal processing device" set forth in any one of the above modes (9)-(16), and the RSD can be considered to constitute an example of the "retinal scanning display" set forth in any one of the above modes (9)-(16). In this case, the correspondence between individual components of the signal processing device 39 and the RSD, and individual components set forth in any one of the above modes (9)-(16) can be considered similarly with the case previously described.

Next, a second embodiment of the present invention will be described, provided that, because the present is different from the first embodiment, only with respect to elements related to a horizontal scanning system, and is common to the first embodiment with respect to other elements, the common elements will be omitted in detailed description by reference using the identical reference numerals or names, while only the different elements will be described in greater detail below.

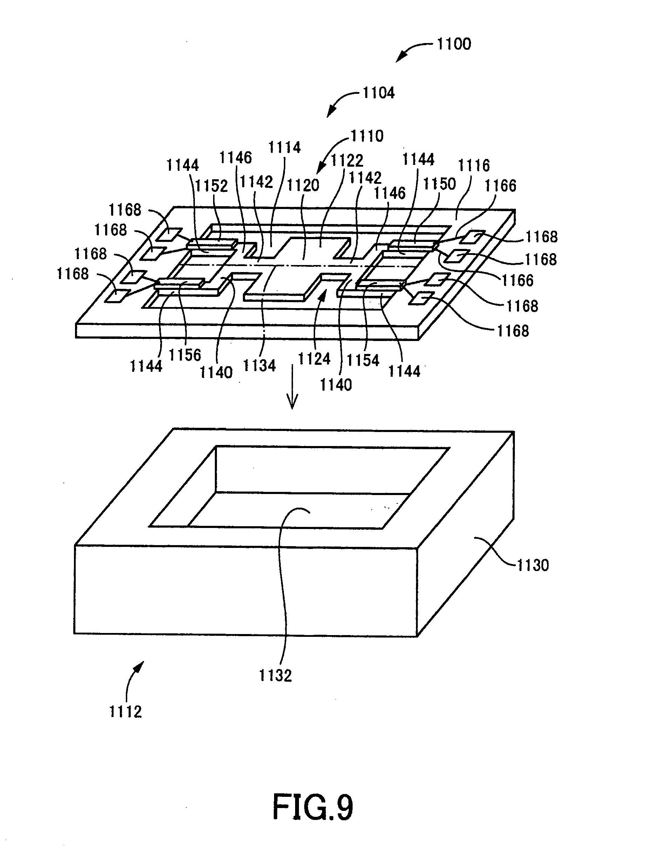

In Fig. 9, a horizontal scanning system 1100 of a retinal scanning display constructed according to the second embodiment is illustrated in exploded perspective view. As illustrated in Fig. 9, the horizontal scanning system 1100 includes an optical scanner 1104 of a torsional-resonance type. This optical scanner 1104 is constructed by mounting a body 1110 onto a base 1112.

The body 1110 is formed by thin film process with an elastic material such as silicon. The body 1110 is generally in the shape of rectangular thin-plate with a light-transmissive through hole 1114. The body 1110 includes at its outside a stationary frame 1116, while it includes at its inside an oscillating body 1124 having a reflective mirror 1122 on which a reflecting surface 1120 is formed.

In comply with the construction of the body 1110, the base 1112 is constructed so as to include a support 1130 on which the stationary frame 1116 is to be mounted when the body 1110 is mounted on the base 1112, and a recess 1132 opposing to the oscillating body 1124. The recess 1132 is formed to have a shape avoiding interference with the base 1112 even when the oscillating body 1124 is displaced due to vibration with the body 1110 being mounted on the base 1112.

As illustrated in Fig. 9, the reflecting surface 1120 of the reflective mirror 1122 is oscillated about a rotation centerline 1134, which is also a line of symmetry of the reflective mirror 1122. The oscillating body 1124 further includes beams 1140 extending on the same plane from the reflective mirror 1122, for coupling the reflective mirror 1122 to the stationary frame 1116. In the present embodiment, a pair of beams 1140 and 1140 oppositely extend from both sides of the reflective mirror 1122, respectively.

Each of the beams 1140 is so constructed as to include a single mirror-side leaf spring 1142, a pair of frame-side leaf springs 1144 and 1144, and a connection 1146 for connecting the mirror-side leaf spring 1142 to the pair of frame-side leaf springs 1144 and 1144. The mirror-side leaf springs 1142 extend on and along the rotation centerline 1134, from both sides of the reflective mirror 1122 opposing to each other in a direction of the rotation centerline 1134, respectively, up to the corresponding connection 1146. The pair of frame-side leaf springs 1144 and 1144 extend from the corresponding connection 1146 along the rotation centerline 1134 so as to be offset from the rotation centerline 1134 in opposite directions.

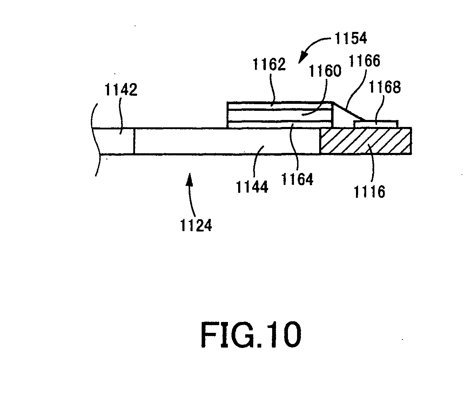

As illustrated in Fig. 9, in the respective beams 1140, actuators 1150, 1152, 1154, and 1156 are secured to the pairs of frame-side leaf springs 1144 and 1144, with the actuators 1150, 1152, 1154, and 1156 extending to the stationary frame 1116. Each actuator 1150, 1152, 1154, 1156 is configured principally by a piezoelectric material 1160 (referred to also as "piezoelectric vibrator" or "piezoelectric element"), wherein the actuator 1154 is illustrated representatively in Fig. 10. The piezoelectric material 1160, which is thin-plate-shaped, is attached to the oscillating body 1124 at its one side face and is interposed between an upper electrode 1162 and a lower electrode 1164 in a direction perpendicular to the one side face. As illustrated in Figs. 9 and 10, the upper and lower electrodes 1162 and 1164 are connected to a pair of input terminals 1168 and 1168 respectively, which are mounted on the stationary frame 1116, via respective lead wires 1166.

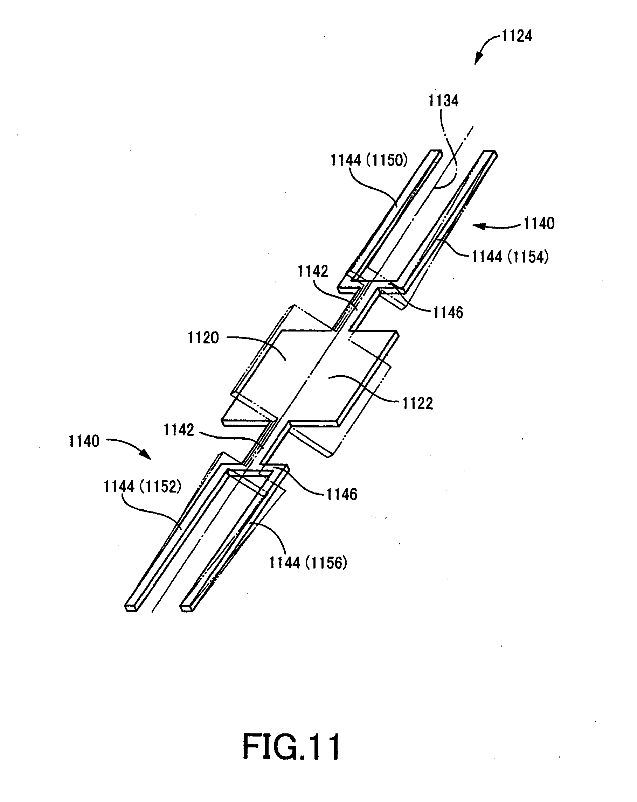

Application of a voltage to these upper and lower electrodes 1162 and 1164 causes the piezoelectric material 1160 to be displaced in a direction perpendicular to a direction in which the voltage has been applied. The displacement causes the beams 1140 to bend or curve, as illustrated in solid lines and two-dotted lines in Fig. 11. The bending occurs in a manner that a portion of the beam 1140 which is connected with the stationary frame 1116 acts as a fixed end, while a portion of the beam 1140 which is connected with the reflective mirror 1122 acts as a free end. As a result, whether the free end is displaced upwardly or downwardly depends on whether the beams 1140 bend upwardly or downwardly.

As will be evident from Fig. 11, among the four actuators 1150, 1152, 1154, and 1156 attached onto the respective four frame-side leaf springs 1144, 1144, 1144, and 1144, a pair of actuators 1150 and 1152 which are positioned on one of opposite sides with respect to the rotation centerline 1134, with the reflective mirror 1122 being interposed between the actuators 1150 and 1152, and a pair of actuators 1154 and 1156 which are positioned on the other side, with the reflective mirror 1122 being interposed between the actuators 1154 and 1156, individually bend in a manner that two of the piezoelectric materials 1160 and 1160 which belong to each of the pair of actuators 1150 and 1152 and the pair of actuators 1154 and 1156 are displaced in the same direction at their free ends.

On the other hand, a pair of actuators 1150 and 1154 which are positioned on one of opposite sides with respect to the reflective mirror 1122, with the rotation centerline 1134 being interposed between the actuators 1150 and 1154, and a pair of actuators 1152 and 1156 which are positioned on the other side, with the rotation centerline 1134 being interposed between the actuators 1152 and 1156, individually bend in a manner that two of the piezoelectric materials 1160 and 1160 which belong to each of the pair of actuators 1150 and 1154 and the pair of actuators 1152 and 1156 are displaced in opposite directions at their free ends.

As a result, as illustrated in Fig. 11, a uniform rotational displacement of the reflective mirror 1122 is excited by both a displacement in one direction of the pair of actuators 1150 and 1152 positioned on one of opposite sides with respect to the rotation centerline 1134, and a displacement in a reverse direction of the actuators 1150 and 1152 of the pair of actuators 1154 and 1156 positioned on the other side.

To summarize, each frame-side leaf spring 1144 has the function of transforming a linear displacement (lateral displacement) of the piezoelectric material 1160 attached onto each frame-side leaf spring 1144 into a bending movement (longitudinal displacement), and the connection 1146 has the function of transforming the bending movement of each frame-side leaf spring 1144 into a rotary movement of the mirror-side leaf spring 1142. The rotary movement of the mirror-side leaf spring 1142 causes a rotation of the reflective mirror 1122.

Therefore, in the present embodiment, for the control of the four actuators 1150, 1152, 1154, and 1156, two of the actuators 1150 and 1152 which are positioned on one of opposite sides with respect to the rotation centerline 1134, which is to say, the actuator 1150 positioned at the upper right of Fig. 9 and the actuator 1152 positioned at the upper left of Fig. 9, constitute a first pair, while two of the actuators 1154 and 1156 which are positioned on the other side, which is to say, the actuator 1154 positioned at the lower right of Fig. 9 and the actuator 1156 positioned at the lower left of Fig. 9, constitute a second pair.

In the present embodiment, for allowing the two actuators 1150 and 1152 forming the first pair and the two actuators 1154 and 1156 forming the second pair to be displaced in opposite directions, to thereby excite reciprocal rotation or angular oscillation of the reflective mirror 1122 about its rotation centerline 1134, alternating voltages identical in phase to each other are applied to the two actuators 1150 and 1152 forming the first pair, while alternating voltages identical in phase to each other but opposite in phase to the alternating voltages for the first pair, are applied to the two actuators 1154 and 1156 forming the second pair. As a result, where both of the two actuators 1150 and 1152 forming the first pair bend downwardly in Fig. 9, both of the two actuators 1154 and 1156 forming the second pair bend upwardly in Fig. 9.

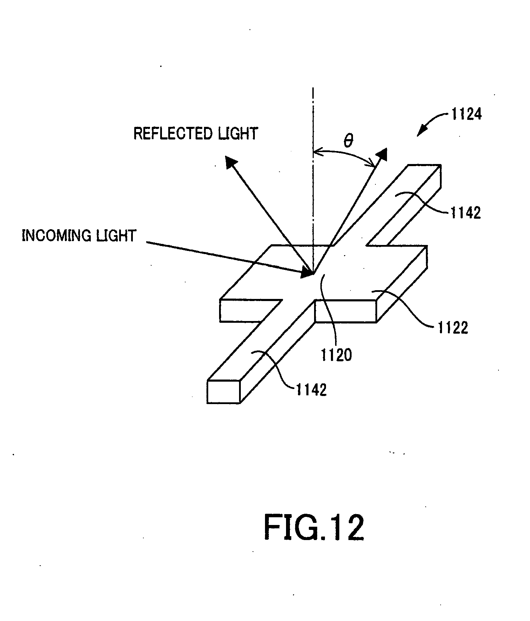

In Fig. 12, there is illustrated how a laser beam entering the reflecting surface 1120 (incident light) is reflected from and leaves the reflecting surface 1120, and how the reflected laser beam (reflected light) is deflected at a scan angle θ.

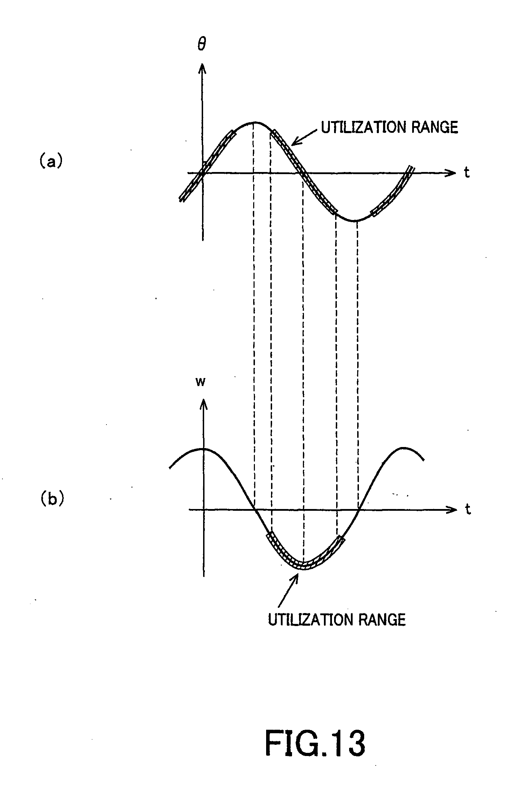

In Fig. 13(a), there is illustrated in graph a profile of a scan angle θ varying with time t. In the optical scanner 1104 of a torsional resonance type, not the entire range over which the scan angle θ can vary is utilized for laser beam scan, and only an approximately linear region of the graph of Fig. 13(a) is established as a utilization range for use in laser beam scan. This utilization range is established to allow the scan angle θ to vary as linearly relative to the time t, as possible.

In Fig. 13 (b), there is illustrated in graph a profile of a scan angular-velocity ω, which represents a rate in change of the scan angle θ, varying with time t. As will be apparent from this graph, in the torsional resonant optical scanner 1104, the scan angular-velocity ω varies with time t. The utilization range indicated in Fig. 13 (a), which is established in an attempt to reduce a temporal change in the scan angular-velocity ω, nevertheless exhibits a tendency that the scan angular-velocity ω changes with time t. More specifically, an absolute value of the scan angular-velocity ω within a middle region of the utilization range is large and is almost held constant irrespective of elapse of the time t, while an absolute value of the scan angular-velocity ω within marginal regions of the utilization range is small and highly reduces as the time t elapses.

In addition, a viewer, because of the light-receiving characteristics of a photoreceptor cell in the retina 14, etc., tends to perceive the light intensity of a laser beam emerged from the optical scanner 1104, not via an instantaneous light intensity of the laser beam, but rather via the time integral of light intensities of the laser beam.

For the reason, when a scan angular-velocity ω varies with time t, even if an instantaneous light intensity of a laser beam is kept constant, the larger an absolute value of the scan angular-velocity ω, the lower the light intensity perceived by a viewer (time integral). Therefore, even if an instantaneous light intensity of a laser beam impinging on the retina 14 is kept constant, a viewer is caused to perceive that the higher the speed of a laser beam passing through each point of the retina 14, the lower the light intensity of the laser beam.

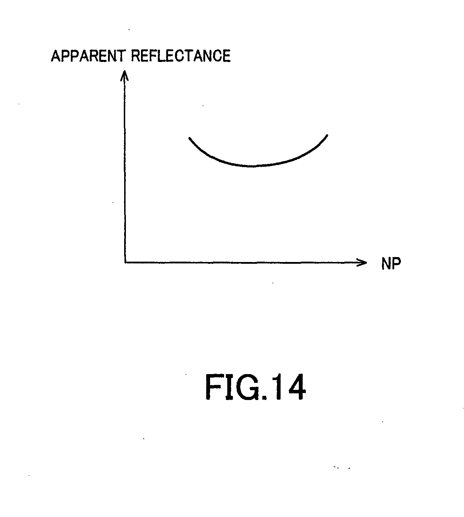

As a result, when the optical scanner 1104 is used, a viewer senses such that, during a scan of a laser beam along one of horizontal scan lines, the laser beam is bright within marginal regions of the one horizontal scan line, while it is dark within a middle region of the one horizontal scan line. This means that, as illustrated in graph in Fig. 14, the reflectance of the reflecting surface 1120 apparently varies as a scan angular-velocity ω varies. On the other hand, the time t is associated with a location of each pixel as viewed in a horizontal scan direction, namely, a pixel number NP, with the result that the apparent reflectance of the reflecting surface 1120 varies with the pixel number NP. In any case, when this optical scanner 1104 is operated, a viewer tends to sense unevenness in light intensity during view of a displayed image.

In contrast, in the present embodiment, the reflectance correction for a horizontal scan is performed to reduce that unevenness in light intensity, even when the optical scanner 1104 is operated.

More specifically, during the reflectance correction for a horizontal scan, raw light-intensity data is corrected by referring to the reflectance correction table for a horizontal scan in the LUT 184, so as to cancel variations in apparent reflectance illustrated in Fig. 14.

As will be apparent from the above description, in the present embodiment, the scanning unit 24 including the horizontal scanning system 1100 and the vertical scanning system 102 constitute an example of the "scanner" set forth in any one of modes (1) - (16), and a portion of the LUT 184 which has been assigned to perform the reflection correction for a horizontal scan constitutes an example of the "second corrector" set forth in the above mode (5), (8), (13) or (16).

It is added that, in the several embodiments described above, there has been used the expression "linearity is enhanced." This means that, when comparing a light modulation signal before correction and a light modulation signal after correction with each other in terms of linearity, the linearity of the light modulation signal after correction is enhanced to be higher than that of the light modulation signal before correction, in other words, a relationship between an actual value and a command value for an optical characteristic after correction becomes closer to a linear relationship than that before correction.

In this regard, the "linearity" may be quantitatively expressed with a parameter representing how a relationship between an actual value and a command value for an optical characteristic is coincident with a linear relationship. The parameter may be defined, for example, after assuming a linear graph most approximate to a graph representing a relationship between an actual value and a command value for an optical characteristic (e.g., a graph representing a least-squares regression line), as a sum of differences (e.g., sum of squares) of the assumed linear graph, from a graph representing a relationship between an actual value and a command value for an optical characteristic. It is meant that, the closer to zero the parameter, the closer to the linear graph a graph representing a relationship between an actual value and a command value for an optical characteristic, and the higher the linearity of a relationship between an actual value and a command value for an optical characteristic.

Therefore, in the several embodiments described above, the expression "linearity is enhanced" does not always mean that a graph indicative of the relationship between an actual value and a command value for an optical characteristic is exactly coincident with a linear graph, and the graph may be a graph deviated from a linear graph.

It is further added that, in view of the differences between multiple individual RSDs, the LUT 184 is preferably established so as to suit a particular operational characteristic of each RSD. For example, when LUTs 184 are individually established for multiple scanning units (e.g., polygon mirrors) belonging to respective multiple RSDs, which are tend to be different in operational characteristic from each other, the reproducibility of a displayed image for content can be improved for any one of those RSDs, irrespective of such a tendency.

Although some of embodiments of the present invention have been described in more detail above with reference to the drawings, these are for illustrative purposes, and the present invention may be practiced in alternative embodiments which include, in the first place, the modes described in the section titled "Disclosure of the Invention," and include modes reflecting various modifications or improvements made in light of the teachings of those skilled in the art.

## Claims

1. A retinal scanning display for displaying an image to a viewer by two-dimensionally scanning a beam of light on the viewer's retina, the retinal scanning display comprising:
an emitter emitting the beam of light;
a light modulator modulating an optical characteristic of the beam of light, based on an entered light-modulation signal;
a scanner scanning the modulated beam of light two-dimensionally; and
a first corrector correcting the light-modulation signal which is to be entered into the light modulator, such that linearity of a command-to-actual-light-modulation-value relationship between a command value and an actual value for the light modulation of the optical characteristic is enhanced.

2. The retinal scanning display according to claim 1, wherein the first corrector corrects the light-modulation signal which is to be entered into the light modulator, such that the linearity of the command-to-actual-light-modulation-value relationship is enhanced irrespective of input-output characteristics of the light modulator.

3. The retinal scanning display according to claim 1, wherein the light modulator includes a light-intensity modulator modulating an intensity of the beam of light, based on an entered light-intensity signal.

4. The retinal scanning display according to claim 3, wherein the emitter emits a plurality of different-colored component beams of light,
wherein the light-intensity modulator modulates the intensity of each component beam of light, based on the entered light-intensity signal, per each component beam of light,
wherein the retinal scanning display further comprises a combiner combining the plurality of different-colored component beams of light into a composite beam of light, upon each component beam of light being intensity-modulated by the light-intensity modulator,
wherein the scanner scans the composite beam of light two-dimensionally, and
wherein the first corrector includes a first correcting section correcting the light-intensity signal which is to be entered into the light-intensity modulator, such that linearity of a command-to-actual-light-intensity-value relationship between a command value and an actual value for the light intensity is enhanced, per each component beam of light.

5. The retinal scanning display according to claim 3, wherein the scanner scans the beam of light by varying an angle of a reflective surface reflecting an incident beam of light thereon, and
wherein the retinal scanning display further comprises a second corrector correcting the light-intensity signal which is to be entered into the light-intensity modulator, such that an actual value of the intensity with which the beam of light illuminates each of sub-areas of an image to be displayed does not depend on a position of each sub-area, irrespective of a characteristic of the scanner that a reflectance of the reflective surface of the scanner varies with varying angles of the reflecting surface.

6. The retinal scanning display according to claim 1,
wherein the light modulator includes a wavefront modulator modulating a curvature of wavefront of the beam of light, based on an entered depth signal, and
wherein the first corrector includes a second correcting section correcting the depth signal which is to be entered into the wavefront modulator, such that linearity of a command-to-actual-depth-value relationship between a command value and an actual value for the depth is enhanced.

7. The retinal scanning display according to claim 6,
wherein the second correcting section corrects the depth signal which is to be entered into the wavefront modulator, such that the linearity of the command-to-actual-depth-value relationship is enhanced irrespective of input-output characteristics of the wavefront modulator.

8. A retinal scanning display for displaying an image to a viewer by two-dimensionally scanning a beam of light on the viewer's retina, the retinal scanning display comprising:
an emitter emitting the beam of light;
a light-intensity modulator modulating an intensity of the beam of light, based on an entered light-intensity signal;
a wavefront modulator modulating a curvature of wavefront of the beam of light, based on an entered depth signal
a scanner two-dimensionally scanning the beam of light which has been intensity- and wavefront-modulated; and
at least one of a first corrector correcting the light-intensity signal which is to be entered into the light-intensity modulator, based on a light-intensity command value indicated by the light-intensity signal; a second corrector correcting the light-intensity signal which is to be entered into the light-intensity modulator, based on a position of each of sub-areas of an image to be displayed, the sub-areas being sequentially illuminated with the beam of light; and a third corrector correcting the depth signal which is to be entered into the wavefront modulator, based on a depth command value indicated by the depth signal.

9. A signal processing apparatus useable in combination with a retinal scanning display for displaying an image to a viewer by two-dimensionally scanning a beam of light on the viewer's retina, the retinal scanning display including: (a) an emitter emitting the beam of light;(b) a light modulator modulating an optical characteristic of the beam of light, based on an entered light-modulation signal; and (c) a scanner scanning the modulated beam of light two-dimensionally,
the signal processing apparatus comprising a first corrector correcting the light-modulation signal which is to be entered into the light modulator, such that linearity of a command-to-actual-value relationship between a command value and an actual value for the light modulation of the optical characteristic is enhanced.

10. The signal processing apparatus according to claim 9, wherein the first corrector corrects the light-modulation signal which is to be entered into the light modulator, such that the linearity of the command-to-actual-value relationship is enhanced irrespective of input-output characteristics of the light-intensity modulator.

11. The signal processing apparatus according to claim 9, wherein the light modulator includes a light-intensity modulator modulating an intensity of the beam of light, based on an entered light-intensity signal.

12. The signal processing apparatus according to claim 11, wherein the emitter emits a plurality of different-colored component beams of light,
wherein the light-intensity modulator modulates the intensity of each component beam of light, based on the entered light-intensity signal, per each component beam of light,
wherein the retinal scanning display further comprises a combiner combining the plurality of different-colored component beams of light into a composite beam of light, upon each component beam of light being intensity-modulated by the light-intensity modulator,
wherein the scanner scans the composite beam of light two-dimensionally, and
wherein the first corrector includes a first correcting section correcting the light-intensity signal which is to be entered into the light-intensitymodulator, such that linearity of a command-to-actual-light-intensity-value relationship between a command value and an actual value for the light intensity is enhanced, per each component beam of light.

13. The signal processing apparatus according to claim 11, wherein the scanner scans the beam of light by varying an angle of a reflective surface reflecting an incident beam of light thereon, and
wherein the signal processing apparatus further comprises a second corrector correcting the light-intensity signal which is to be entered into the light-intensity modulator, such that an actual value of the intensity with which the beam of light illuminates each of sub-areas of an image to be displayed does not depend on a position of each sub-area, irrespective of a characteristic of the scanner that a reflectance of the reflective surface of the scanner varies with varying angles of the reflecting surface.

14. The signal processing apparatus according to claim 9, wherein the light modulator includes a wavefront modulator modulating a curvature of wavefront of the beam of light, based on an entered depth signal, and
wherein the first corrector includes a second correcting section correcting the depth signal which to be entered into the wavefront modulator, such that linearity of a command-to-actual-depth-value relationship between a command value and an actual value for the depth is enhanced.

15. The signal processing apparatus according to claim 14, wherein the second correcting section corrects the depth signal which is to be entered into the wavefront modulator, such that the linearity of the command-to-actual-depth-value relationship is enhanced irrespective of input-output characteristics of the wavefront modulator.

16. A signal processing apparatus useable in combination with a retinal scanning display for displaying an image to a viewer by two-dimensionally scanning a beam of light on the viewer's retina, the retinal scanning display including: (a) an emitter emitting the beam of light; (b) a light-intensity modulator modulating an intensity of the beam of light, based on an entered light-intensity signal; (c) a wavefront modulator modulating a curvature of wavefront of the beam of light, based on an entered depth signal; and (d) a scanner two-dimensionally scanning the beam of light which has been intensity- and wavefront-modulated, the signal processing apparatus comprising:
at least one of a first corrector correcting the light-intensity signal which is to be entered into the light-intensity modulator, based on a light-intensity command value indicated by the light-intensity signal; a second corrector correcting the light-intensity signal which is to be entered into the light-intensity modulator, based on a position of each of sub-areas of an image to be displayed, the sub-areas being sequentially illuminated with the beam of light; and a third corrector correcting the depth signal which is to be entered into the wavefront modulator, based on a depth command value indicated by the depth signal.
